# EUROPÄISCHE PATENTANMELDUNG

(11) **EP 2 644 023 A1**
(43) Veröffentlichungstag der Anmeldung: **02.10.2013**
(21) Anmeldenummer: 13155143.4
(22) Anmeldetag: 14.02.2013
(51) Int. Cl.: A01G 25/14, B05B 9/08

(54) **Pflanzenbewässerungshandvorrichtung**

(30) Priorität: 27.03.2012 DE 102012204894
(71) Anmelder: ROBERT BOSCH GMBH, 70442 Stuttgart (DE)
(72) Erfinder: Ullrich, Andre, 70771 Leinfelden-Echterdingen (DE); Dietel, Juergen, 70597 Stuttgart (DE); Riek, Torsten, 70771 Leinfelden (DE); Weiss, Michael, 70563 Stuttgart (DE); Schlegel, Andreas, 70771 Leinfelden-Echterdingen (DE)

(57) **Zusammenfassung**

Die Erfindung geht aus von einer Pflanzenbewässerungshandvorrichtung (10a,10b), insbesondere einer Gartenpflanzenbewässerungshandvorrichtung, mit einer tragbaren Gehäuseeinheit (12a, 12b) und mit zumindest einer Spritzdüseneinheit (14a, 14b).

Es wird vorgeschlagen, dass die Pflanzenbewässerungshandvorrichtung (10a,10b) zumindest eine zumindest teilweise in der Gehäuseeinheit (12a, 12b) angeordnete Motorpumpeneinheit (16a, 16b) aufweist, die zumindest zu einer Wasserförderung vorgesehen ist.

## Beschreibung

### Stand der Technik

Es ist bereits eine Pflanzenbewässerungshandvorrichtung, insbesondere eine Gartenpflanzenbewässerungshandvorrichtung, mit einer tragbaren Gehäuseeinheit und mit zumindest einer Spritzdüseneinheit, vorgeschlagen worden.

### Offenbarung der Erfindung

Die Erfindung geht aus von einer Pflanzenbewässerungshandvorrichtung, insbesondere von einer Gartenpflanzenbewässerungshandvorrichtung, mit einer tragbaren Gehäuseeinheit und mit zumindest einer Spritzdüseneinheit.

Es wird vorgeschlagen, dass die Pflanzenbewässerungshandvorrichtung zumindest eine zumindest teilweise in der Gehäuseeinheit angeordnete Motorpumpeneinheit aufweist, die zumindest zu einer Wasserförderung vorgesehen ist. Unter einer "Pflanzenbewässerungshandvorrichtung" soll in diesem Zusammenhang insbesondere eine Vorrichtung verstanden werden, die zu einer Bewässerung von Pflanzen und/oder Grünflächen vorgesehen ist. Vorzugsweise ist die Pflanzenbewässerungshandvorrichtung dazu vorgesehen, eine gleichmäßige Verteilung des Wassers zu ermöglichen. Besonders bevorzugt ist über die Pflanzenbewässerungshandvorrichtung eine Einstellung einer Förderleistung möglich. Ferner soll in diesem Zusammenhang unter "tragbar " insbesondere verstanden werden, dass die Gehäuseeinheit in einem Betrieb dazu vorgesehen ist, von einem Bediener ohne direkten Bodenkontakt gehalten zu werden. Vorzugsweise soll darunter insbesondere verstanden werden, dass die Gehäuseeinheit eine kompakte Bauform aufweist. Dabei soll unter einer "kompakten Bauform" insbesondere verstanden werden, dass ein kleinster Quader, der die Gehäuseeinheit gerade noch umfasst, ein Volumen von maximal 0,1 m³, vorzugsweise von maximal 0,075 m³ und besonders bevorzugt von maximal 0,05 m³ aufweist. Zudem oder alternativ soll darunter insbesondere verstanden werden, dass die Gehäuseeinheit mit darin enthaltenen Bauteilen ein Gesamtgewicht von maximal 15kg, vorzugsweise von maximal 10kg und besonders bevorzugt von maximal 5kg aufweist. Des Weiteren soll in diesem Zusammenhang unter einer "Gehäuseeinheit" insbesondere eine Einheit verstanden werden, die zu einem Schutz von weiteren Bauteilen der Pflanzenbewässerungshandvorrichtung vorgesehen ist. Vorzugsweise weist die Gehäuseeinheit zumindest einen Griffbereich auf und/oder ist starr mit einer Griffeinheit verbunden. Bevorzugt weist die Gehäuseeinheit zumindest zwei Gehäuseschalen auf, die zumindest ein Bauteil der Pflanzenbewässerungshandvorrichtung umgeben. Besonders bevorzugt bestehen die Gehäuseschalen zumindest teilweise aus einem Kunststoff. Dabei soll unter "zumindest teilweise" insbesondere verstanden werden, dass zumindest 30%, vorzugsweise zumindest 50% und besonders bevorzugt zumindest 70% der Gehäuseschalen aus Kunststoff bestehen. Ferner soll unter einer "Spritzdüseneinheit" in diesem Zusammenhang insbesondere eine Einheit verstanden werden, die in einem Betrieb zu einer kontrollierten Führung und/oder Verteilung eines Wasserstroms vorgesehen ist. Vorzugsweise soll darunter insbesondere eine Einheit verstanden werden, die zu einer Erzeugung eines Wasserstrahls vorgesehen ist. Besonders bevorzugt weist die Spritzdüseneinheit zumindest ein Einstellelement auf, über das eine Art des Wasserstrahls verändert werden kann. Grundsätzlich wäre jedoch auch denkbar, dass die Spritzdüseneinheit von einem Schlauchende gebildet ist. Dabei soll in diesem Zusammenhang unter einem Wasserstrahl insbesondere eine Anhäufung von frei in der Luft fliegenden Wassermolekülen verstanden werden, wobei unter "frei" insbesondere materiell ungeführt verstanden werden soll. Es sind verschiedene Wasserstrahlarten denkbar, wie insbesondere Normalstrahl, Brausestrahl, Druckstrahl, Vollstrahl, Nebelstrahl, Fächerstrahl und/oder Sprühstrahl. Des Weiteren soll in diesem Zusammenhang unter "zumindest teilweise" insbesondere verstanden werden, dass zumindest 30%, vorzugsweise zumindest 60% und besonders bevorzugt zumindest 90% eines Volumens der Motorpumpeneinheit innerhalb der Gehäuseeinheit angeordnet sind. Unter einer "Motorpumpeneinheit" soll in diesem Zusammenhang insbesondere eine Pumpeneinheit mit einer Motoreinheit verstanden werden, wobei die Motoreinheit zu einem Antrieb der Pumpeneinheit vorgesehen ist. Vorzugsweise soll dabei unter einer "Pumpeneinheit" insbesondere eine Einheit verstanden werden, die zu einer Förderung einer Flüssigkeit, wie insbesondere Wasser, vorgesehen ist. Ferner soll dabei unter einer "Motoreinheit" in diesem Zusammenhang insbesondere ein elektrischer und/oder mechanischer und/oder pneumatischer Motor verstanden werden, der in einem Betrieb vorteilhaft zur Erzeugung einer Dreh- und/oder Oszillationsbewegung vorgesehen ist.

Durch die erfindungsgemäße Ausgestaltung der Pflanzenbewässerungshandvorrichtung kann vorteilhaft eine kompakte und mobile Bewässerungsvorrichtung bereitgestellt werden, die unabhängig von einem Leitungsdruck betrieben werden kann. Vorteilhaft kann dadurch eine Bewässerung aus einem stehenden und/oder druckneutralen Wasserspeicher realisiert werden. Des Weiteren kann dadurch eine Bewässerung von Grünflächen ohne einen Wasserleitungsanschluss ermöglicht werden. Ferner sind keine zusätzlichen Pumpaggregate erforderlich.

Ferner wird vorgeschlagen, dass die Motorpumpeneinheit zumindest eine Elektromotoreinheit aufweist. Unter einer "Elektromotoreinheit" soll in diesem Zusammenhang insbesondere eine Motoreinheit verstanden werden, die dazu vorgesehen ist, elektrische Energie in mechanische Energie umzuwandeln. Dadurch kann vorteilhaft eine besonders kompakte und kontinuierliche Motoreinheit bereitgestellt werden.

Es wird ferner vorgeschlagen, dass die Spritzdüseneinheit zumindest teilweise starr mit der Gehäuseeinheit verbunden ist. Unter "zumindest teilweise" soll in diesem Zusammenhang insbesondere verstanden werden, dass zumindest ein Bauteil der Spritzdüseneinheit starr mit der Gehäuseeinheit verbunden ist. Ferner soll in diesem Zusammenhang unter "starr" insbesondere verstanden werden, dass die starr verbundenen Einheiten und/oder Elemente relativ bewegungslos miteinander verbunden sind. Vorzugsweise sind die Einheiten und/oder Elemente direkt und/oder über zumindest ein Bauteil aus einem unelastischen Material miteinander verbunden. Dabei soll in diesem Zusammenhang unter einem "unelastischen Material" insbesondere ein Material mit einem Elastizitätsmodul von mindestens 5 kN/mm², vorzugsweise von mindestens 10 kN/mm² und besonders bevorzugt von mindestens 15 kN/mm² verstanden werden. Dadurch kann insbesondere eine besonders einfach handhabbare Pflanzenbewässerungshandvorrichtung bereitgestellt werden. Ferner kann eine besonders kompakte Pflanzenbewässerungshandvorrichtung bereitgestellt werden.

Des Weiteren wird vorgeschlagen, dass die Spritzdüseneinheit zumindest ein Diffusorelement aufweist. Unter einem "Diffusorelement" soll in diesem Zusammenhang insbesondere ein Element verstanden werden, das zu einer Erzeugung eines gestreuten Wasserstrahls vorgesehen ist. Vorzugsweise weist das Element insbesondere eine Vielzahl von Ausnehmungen auf, die zu einer Erzeugung einer Vielzahl von Teilstrahlen vorgesehen ist, die wiederum einen gestreuten Wasserstrahl erzeugen. Zudem oder alternativ weist das Diffusorelement insbesondere ein Streuelement auf, das dazu vorgesehen ist, auftreffendes Wasser in eine Vielzahl von Richtungen um das Streuelement herum umzuleiten und daraus einen gestreuten Wasserstrahl zu erzeugen. Besonders bevorzugt ist dazu das Diffusorelement zur Erzeugung eines Brausestrahls, eines Nebelstrahls, eines Fächerstrahls und/oder eines Sprühstrahls vorgesehen. Dadurch kann vorteilhaft eine besonders schonende Bewässerung erreicht werden. Ferner kann eine Wassermenge vorteilhaft dosiert werden.

Es wird ferner vorgeschlagen, dass die Pflanzenbewässerungshandvorrichtung eine zumindest teilweise in der Gehäuseeinheit angeordnete Akkuaufnahmevorrichtung zur Aufnahme einer Akkuvorrichtung aufweist. Unter einer "Akkuaufnahmevorrichtung" soll in diesem Zusammenhang insbesondere eine Vorrichtung verstanden werden, die zu einer Aufnahme einer Akkuvorrichtung vorgesehen ist. Vorzugsweise weist die Akkuaufnahmevorrichtung zumindest ein Akkuvorrichtungshalteelement auf, das dazu vorgesehen ist, eine Akkuvorrichtung zumindest teilweise in der Akkuaufnahmevorrichtung zu halten. Besonders bevorzugt weist die Akkuaufnahmevorrichtung zumindest ein elektrisches Kontaktelement auf, das in einem eingesteckten Zustand der Akkuvorrichtung dazu vorgesehen ist, an ein elektrisches Kontaktelement der Akkuvorrichtung anzuliegen. Unter einer "Akkuvorrichtung" soll dabei insbesondere eine Vorrichtung zum temporären Speichern elektrischer Energie verstanden werden. Dadurch kann eine besonders gut handhabbare Pflanzenbewässerungshandvorrichtung bereitgestellt werden. Ferner kann die Pflanzenbewässerungshandvorrichtung dadurch ohne eine Verbindung zu einer Steckdose und/oder einem Stromaggregat verwendet werden.

Es wird weiter vorgeschlagen, dass die Pflanzenbewässerungshandvorrichtung eine Schlauchanschlussvorrichtung zur Befestigung eines Schlauchs und/oder eines Schlauchanschlusses des Schlauchs aufweist. Unter einer "Schlauchanschlussvorrichtung" soll in diesem Zusammenhang insbesondere eine Vorrichtung verstanden werden, über die ein Schlauch direkt und/oder indirekt angeschlossen werden kann. Vorzugsweise soll darunter insbesondere ein Schlauchanschlussstutzen verstanden werden, auf den ein Schlauch und/oder ein Schlauchanschluss aufgesteckt und/oder aufgeschraubt werden kann. Besonders bevorzugt ist die Schlauchanschlussvorrichtung insbesondere von einer handelsüblichen Schlauchanschlussvorrichtung gebildet. Es sind verschiedene, dem Fachmann als sinnvoll erscheinende Arten des Schlauches denkbar, insbesondere soll darunter jedoch ein Gartenschlauch verstanden werden. Vorteilhaft ist der Schlauchanschluss insbesondere von einem handelsüblichen Schlauchanschluss gebildet. Dadurch können insbesondere naheliegende, über einen Schlauch erreichbare Wasserreservoirs, wie beispielsweise Regenwassertonnen oder Teiche, zur Bewässerung genutzt werden. Ferner können dadurch vorzugsweise bereits vorhandene und/oder handelsübliche Schläuche und/oder Schlauchanschlüsse verwendet werden.

Zudem wird vorgeschlagen, dass die Pflanzenbewässerungshandvorrichtung eine zumindest teilweise in der Gehäuseeinheit angeordnete Wassertankaufnahmevorrichtung zur Aufnahme einer Wassertankvorrichtung aufweist. Unter einer "Wassertankaufnahmevorrichtung" soll in diesem Zusammenhang insbesondere eine Vorrichtung verstanden werden, die zu einer Aufnahme einer Wassertankvorrichtung vorgesehen ist. Vorzugsweise weist die Wassertankaufnahmevorrichtung zumindest ein Wassertankvorrichtungshalteelement auf, das dazu vorgesehen ist, eine Akkuvorrichtung zumindest teilweise in der Akkuaufnahmevorrichtung zu halten. Bevorzugt weist die Wassertankaufnahmevorrichtung zumindest ein Dichtungselement auf, das dazu vorgesehen ist, ein ungewolltes Auslaufen eines Inhalts aus der Wassertankvorrichtung in einem aufgenommenen Zustand zu verhindern. Besonders bevorzugt weist die Wassertankaufnahmevorrichtung zumindest ein Schlauchelement auf, das dazu vorgesehen ist, in einem aufgenommenen Zustand der Wassertankvorrichtung zumindest teilweise in die Wassertankvorrichtung hineinzuragen. Dadurch kann insbesondere eine Bewässerung ohne einen Anschluss an ein von der Wassertankvorrichtung differierendes Wasserreservoir realisiert werden. Ferner kann dadurch eine vollkommen tragbare Pflanzenbewässerungshandvorrichtung bereitgestellt werden.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Pflanzenbewässerungshandvorrichtung mit einer Akkuvorrichtung, einem Schlauchanschluss und einem Schlauch, der in ein Wasserreservoir ragt, in einer schematischen Darstellung und
- Fig. 2: eine alternative erfindungsgemäße Pflanzenbewässerungshandvorrichtung mit einer Akkuvorrichtung und einer Wassertankvorrichtung in einer schematischen Darstellung.

### Beschreibung der Ausführungsbeispiele

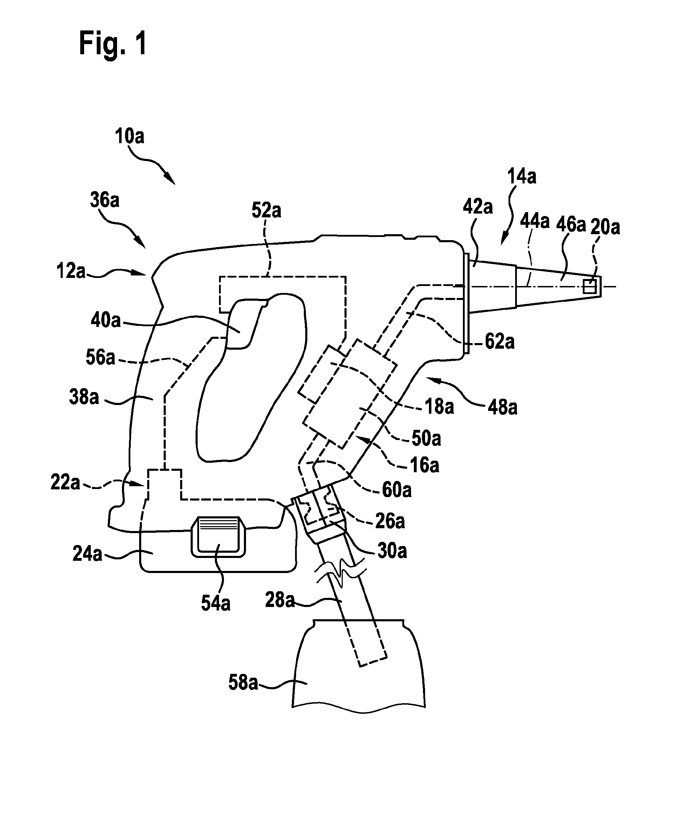

Die Figur 1 zeigt eine erfindungsgemäße Pflanzenbewässerungshandvorrichtung 10a mit einer tragbaren Gehäuseeinheit 12a und mit einer Spritzdüseneinheit 14a. Die Pflanzenbewässerungshandvorrichtung 10a ist von einer Gartenpflanzenbewässerungshandvorrichtung gebildet. Die Pflanzenbewässerungshandvorrichtung 10a ist pistolenartig ausgebildet und weist einen pistolenartigen Griffbereich 38a auf. An dem Griffbereich 38a ist ein Schalterelement 40a angeordnet. Die tragbare Gehäuseeinheit 12a besteht aus Kunststoff. Die Gehäuseeinheit 12a ist aus zwei Gehäuseschalenelementen zusammengesetzt. Die Gehäuseschalenelemente sind zusammengeschraubt. Grundsätzlich wäre jedoch auch denkbar, dass die Gehäuseschalenelemente zusammengeklebt und/oder über ein anderes Fertigungsverfahren verbunden sind. Die Spritzdüseneinheit 14a ist in einem dem Griffbereich 38a abgewandten Bereich der Pflanzenbewässerungshandvorrichtung 10a angeordnet. Die Spritzdüseneinheit 14a ist außerhalb der Gehäuseeinheit 12a an der Gehäuseeinheit 12a angeordnet. Die Spritzdüseneinheit 14a weist ein Einstellelement 42a auf, über das eine Art eines Wasserstrahls verändert werden kann. Das Einstellelement 42a ist von einem Einstellring gebildet. Das Einstellelement 42a ist um eine Achse 44a drehbar um einen Grundkörper 46a der Spritzdüseneinheit 14a angeordnet. Die Spritzdüseneinheit 14a ist teilweise starr mit der Gehäuseeinheit 12a verbunden. Der Grundkörper 46a der Spritzdüseneinheit 14a ist starr mit der Gehäuseeinheit 12a verbunden.

Die Spritzdüseneinheit 14a weist ein Diffusorelement 20a auf. Das Diffusorelement 20a ist in einem von der Gehäuseeinheit 12a abgewandten, vorderen Bereich des Grundkörpers 46a der Spritzdüseneinheit 14a angeordnet. Über das Einstellelement 42a und das Diffusorelement 20a kann ein Art des Wasserstrahls verändert werden.

Die Pflanzenbewässerungshandvorrichtung 10a weist eine in der Gehäuseeinheit 12a angeordnete Motorpumpeneinheit 16a auf, die zumindest zu einer Wasserförderung vorgesehen ist. Die Motorpumpeneinheit 16a ist in einem dem Griffbereich 38a gegenüberliegenden Bereich 48b der Gehäuseeinheit 12a angeordnet. Der Griffbereich 38a und der Bereich 48a sind ringförmig miteinander verbunden. Die Motorpumpeneinheit 16a weist eine Elektromotoreinheit 18a auf. Ferner weist die Motorpumpeneinheit 16a eine Saugpumpeneinheit 50a auf. Die Saugpumpeneinheit 50a ist über eine nicht weiter sichtbare Welle von der Elektromotoreinheit 18a angetrieben. Die Elektromotoreinheit 18a ist über eine Leitung 52a mit dem Schalterelement 40a verbunden. Die Leitung 52a verläuft vollkommen innerhalb der Gehäuseeinheit 12a. Über das Schalterelement 40a kann die Elektromotoreinheit 18a an- und ausgeschaltet werden.

Die Pflanzenbewässerungshandvorrichtung 10a weist eine in der Gehäuseeinheit 12a angeordnete Akkuaufnahmevorrichtung 22a zur Aufnahme einer Akkuvorrichtung 24a auf. Die Akkuaufnahmevorrichtung 22a ist zwischen dem Griffbereich 38a und dem Bereich 48a angeordnet. Die Akkuaufnahmevorrichtung 22a ist in einer von dem Griffbereich 38a wegweisenden Richtung zur Aufnahme der Akkuvorrichtung 24a geöffnet. In dem in Figur 1 dargestellten Zustand ist die Akkuvorrichtung 24a in der Akkuaufnahmevorrichtung 22a der Pflanzenbewässerungsvorrichtung 10a angeordnet. Die Akkuaufnahmevorrichtung 22a weist zwei nicht weiter sichtbare, gegenüberliegende Rastelementaufnahmen auf, in die jeweils ein Rastelement 54a der Akkuvorrichtung 24a eingreift. Die Rastelemente 54a der Akkuvorrichtung 24a sind federbelastet. Ferner weist die Akkuaufnahmevorrichtung 22a zwei nicht weiter sichtbare Kontaktbereiche auf. Die Kontaktbereiche liegen elektrisch leitend an der Akkuvorrichtung 24a an. Die Kontaktbereiche der Akkuaufnahmevorrichtung 22a sind über eine Leitung 56a mit dem Schalterelement 40a verbunden. Die Leitung 56a verläuft vollkommen innerhalb der Gehäuseeinheit 12a. Über das Schalterelement 40a kann eine elektrische Verbindung zwischen der Akkuvorrichtung 24a und der Elektromotoreinheit 18a geschlossen und geöffnet werden. In einem gedrückten Zustand des Schalterelements 40a ist eine elektrische Verbindung zwischen der Akkuvorrichtung 24a und der Elektromotoreinheit 18a geschlossen.

Die Pflanzenbewässerungshandvorrichtung 10a weist eine Schlauchanschlussvorrichtung 26a zur Befestigung eines Schlauchanschlusses 30a eines Schlauchs 28a auf. Die Schlauchanschlussvorrichtung 26a ist von einem Schlauchanschlussstutzen gebildet. Der Schlauchanschluss 30a ist auf die Schlauchanschlussvorrichtung 26a aufgesteckt. Der Schlauch 28a ist von einem Gartenschlauch gebildet. Der Schlauch 28a ragt an einem dem Schlauchanschluss 30a abgewandten Ende in ein mit Wasser gefülltes Wasserreservoir 58a. Das Wasserreservoir 58a ist von einer Regenwassertonne gebildet, wobei das Wasserreservoir 58a in der Figur 1 vereinfacht dargestellt ist, insbesondere bezüglich seiner Größenrelation zu der Pflanzenbewässerungsvorrichtung 10a. Die Schlauchanschlussvorrichtung 26a ist über ein Schlauchelement 60a mit einer Saugseite der Saugpumpeneinheit 50a der Motorpumpeneinheit 16a verbunden. Die Saugpumpeneinheit 50a der Motorpumpeneinheit 16a ist auf einer Druckseite über ein Schlauchelement 62a mit der Spritzdüseneinheit 14a verbunden. Die Schlauchelemente 60a, 62a verlaufen vollkommen innerhalb der Gehäuseeinheit 12a.

Die Pflanzenbewässerungshandvorrichtung 10a bildet mit der Akkuvorrichtung 24a ein System 36a.

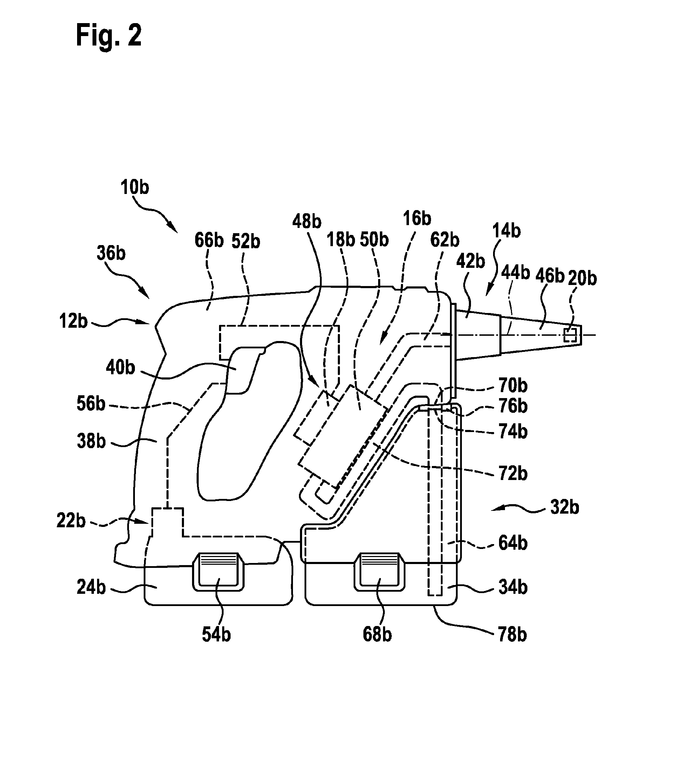

In der Figur 2 ist ein weiteres Ausführungsbeispiel der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung des ersten Ausführungsbeispiels, insbesondere der Figur 1, verwiesen werden kann. Zur Unterscheidung der Ausführungsbeispiele ist der Buchstabe a den Bezugszeichen des Ausführungsbeispiels in der Figur 1 nachgestellt. In dem Ausführungsbeispiel der Figur 2 ist der Buchstabe a durch den Buchstaben b ersetzt.

Die Figur 2 zeigt eine alternative erfindungsgemäße Pflanzenbewässerungshandvorrichtung 10b mit einer tragbaren Gehäuseeinheit 12b und mit einer Spritzdüseneinheit 14b. Die Pflanzenbewässerungshandvorrichtung 10b weist eine in der Gehäuseeinheit 12b angeordnete Motorpumpeneinheit 16b auf, die zumindest zu einer Wasserförderung vorgesehen ist.

Die Pflanzenbewässerungshandvorrichtung 10b weist eine in der Gehäuseeinheit 12b angeordnete Wassertankaufnahmevorrichtung 32b zur Aufnahme einer Wassertankvorrichtung 34b auf. Die Wassertankaufnahmevorrichtung 32b ist auf einer von einem Griffbereich 38b abgewandten Seite eines Bereichs 48b angeordnet. Die Wassertankaufnahmevorrichtung 32b schließt direkt an den Bereich 48b an. Ein Aufnahmebereich 64b der Wassertankaufnahmevorrichtung 32b ist im Wesentlichen von einem restlichen Innenbereich 66b der Gehäuseeinheit 12b getrennt. Ferner ist die Wassertankaufnahmevorrichtung 32b in dieselbe Richtung geöffnet, wie eine Akkuaufnahmevorrichtung 22b. In einer Richtung entlang einer Achse 44b der Spritzdüseneinheit 14b betrachtet, sind die Akkuaufnahmevorrichtung 22b und die Wassertankaufnahmevorrichtung 32b hintereinander angeordnet. In dem in Figur 2 dargestellten Zustand ist eine Akkuvorrichtung 24b in der Akkuaufnahmevorrichtung 22b der Pflanzenbewässerungsvorrichtung 10b und die Wassertankvorrichtung 34b in der Wassertankaufnahmevorrichtung 32b der Pflanzenbewässerungsvorrichtung 10b angeordnet. Die Wassertankaufnahmevorrichtung 32b weist zwei nicht weiter sichtbare, gegenüberliegende Rastelementaufnahmen auf, in die jeweils ein Rastelement 68b der Wassertankvorrichtung 34b eingreift. Die Rastelemente 68b der Wassertankvorrichtung 34b sind federbelastet. In einer von den Rastelementaufnahmen abgewandten Seite der Wassertankaufnahmevorrichtung 32b ist eine Öffnung 70b angeordnet. Die Öffnung 70b verbindet den Aufnahmebereich 64b der Wassertankaufnahmevorrichtung 32b mit dem Innenbereich 66b der Gehäuseeinheit 12b. Durch die Öffnung 70b verläuft ein Schlauchelement 72b. Das Schlauchelement 72b ist an einem Ende in dem Innenbereich 66b mit einer Saugseite einer Saugpumpeneinheit 50b der Motorpumpeneinheit 16b verbunden. An einem anderen Ende in dem Aufnahmebereich 64b der Wassertankaufnahmevorrichtung 32b ist das Schlauchelement 72b frei.

Die Wassertankvorrichtung 34b ist mit seiner Form im Wesentlichen einer Form des Aufnahmebereichs 64b der Wassertankaufnahmevorrichtung 32b angepasst. In einem Bereich der Öffnung 70b der Wassertankaufnahmevorrichtung 32b weist die Wassertankvorrichtung 34b ebenfalls eine Öffnung 74b auf. Um die Öffnung 74b herum ist ein Dichtungselement 76b angeordnet. Das Dichtungselement 76b ist von einem Dichtungsring gebildet. In einem aufgenommenen Zustand der Wassertankvorrichtung 34b in der Wassertankaufnahmevorrichtung 32b wird das Dichtungselement 76b gegen einen Rand der Öffnung 70b gedrückt und über die Rastelemente 68b in dieser Stellung gehalten. Das Schlauchelement 72b ragt in diesem Zustand durch die Öffnung 70b der Wassertankaufnahmevorrichtung 32b und die Öffnung 74b der Wassertankvorrichtung 34b in die Wassertankvorrichtung 34b. Das Schlauchelement 72b ragt annähernd bis zu einem Boden 78b der Wassertankvorrichtung 34b.

Die Pflanzenbewässerungshandvorrichtung 10b bildet mit der Akkuvorrichtung 24b und der Wassertankvorrichtung 34b ein System 36b.

## Patentansprüche

1. Pflanzenbewässerungshandvorrichtung, insbesondere Gartenpflanzenbewässerungshandvorrichtung, mit einer tragbaren Gehäuseeinheit (12a, 12b) und mit zumindest einer Spritzdüseneinheit (14a, 14b), **gekennzeichnet durch** zumindest eine zumindest teilweise in der Gehäuseeinheit (12a, 12b) angeordnete Motorpumpeneinheit (16a, 16b), die zumindest zu einer Wasserförderung vorgesehen ist.

2. Pflanzenbewässerungshandvorrichtung nach Anspruch 1, **dadurch gekennzeichnet, dass** die Motorpumpeneinheit (16a, 16b) zumindest eine Elektromotoreinheit (18a, 18b) aufweist.

3. Pflanzenbewässerungshandvorrichtung nach Anspruch 1 oder 2, **dadurch gekennzeichnet, dass** die Spritzdüseneinheit (14a, 14b) zumindest teilweise starr mit der Gehäuseeinheit (12a, 12b) verbunden ist.

4. Pflanzenbewässerungshandvorrichtung nach einem der vorhergehenden Ansprüche, **dadurch gekennzeichnet, dass** die Spritzdüseneinheit (14a, 14b) zumindest ein Diffusorelement (20a, 20b) aufweist.

5. Pflanzenbewässerungshandvorrichtung nach einem der vorhergehenden Ansprüche, **gekennzeichnet durch** eine zumindest teilweise in der Gehäuseeinheit (12a, 12b) angeordnete Akkuaufnahmevorrichtung (22a, 22b) zur Aufnahme einer Akkuvorrichtung (24a, 24b).

6. Pflanzenbewässerungshandvorrichtung nach einem der vorhergehenden Ansprüche, **gekennzeichnet durch** eine Schlauchanschlussvorrichtung (26a) zur Befestigung eines Schlauchs (28a) und/oder eines Schlauchanschlusses (30a) des Schlauchs (28a).

7. Pflanzenbewässerungshandvorrichtung nach einem der vorhergehenden Ansprüche, **gekennzeichnet durch** eine zumindest teilweise in der Gehäuseeinheit (12b) angeordnete Wassertankaufnahmevorrichtung (32b) zur Aufnahme einer Wassertankvorrichtung (34b).

8. Akkuvorrichtung für eine Pflanzenbewässerungshandvorrichtung (10a, 10b) zumindest nach Anspruch 5.

9. Wassertankvorrichtung für eine Pflanzenbewässerungshandvorrichtung (10b) zumindest nach Anspruch 7.

10. System mit einer Pflanzenbewässerungshandvorrichtung (10a, 10b) nach einem der Ansprüche 1 bis 7 und mit zumindest einer Akkuvorrichtung (24a, 24b) nach Anspruch 8 und/oder zumindest einer Wassertankvorrichtung (34b) nach Anspruch 9.
